# EUROPEAN PATENT APPLICATION

(11) **EP 4 257 238 A1**
(43) Date of publication of application: **11.10.2023**
(21) Application number: 21900583.2
(22) Date of filing: 30.11.2021
(51) Int. Cl.: B01J 33/00, B01J 35/04, B01D 53/86

(54) **CATALYST REACTOR EQUIPPED WITH ASH DEPOSITION PREVENTION FUNCTION**

(30) Priority: 01.12.2020 JP 2020199934
(71) Applicant: Mitsubishi Heavy Industries, Ltd., Tokyo 100-8332 (JP)
(72) Inventor: MITSUI Yoshiaki, Tokyo 100-8332 (JP); HAYASHI Tomoyuki, Tokyo 100-8332 (JP); OGASAHARA Toru, Tokyo 100-8332 (JP); YOSHIMURA Hiroyuki, Tokyo 100-8332 (JP)
(74) Representative: Studio Torta S.p.A.
(86) International application number: PCT/JP2021/043795
(87) International publication number: WO 2022/118830

(57) **Abstract**

A catalytic reactor, comprising a reactor duct, beams spread horizontally, catalyst blocks comprising a cuboid or cubic frame-shaped case and a catalyst unit incorporated in the frame-shaped case, a first diversion member, a second diversion member, and a third diversion member, wherein the catalyst block is bridged between and supported by at least two of the beams and the catalyst blocks are installed side by side in the reactor duct so that a front face on one of the catalyst blocks and a rear face on another of the catalyst blocks face each other and are adjacent to each other and a right side face on one of the catalyst blocks and a left side face on another of the catalyst blocks face each other and are adjacent to each other, the first diversion member is attached so as to close a gap between the front face and the rear face of the adjacent catalyst blocks from above, the second diversion member is attached so as to close a gap between the right side face and the left side face of the adjacent catalyst blocks from above, and the third diversion member is attached so as to close a gap between the adjacent catalyst blocks not occluded by the first and second diversion members and to cover longitudinal end portions of the first and second diversion members.

## Description

### TECHNICAL FIELD

The present invention relates to vertical downflow type catalytic reactor. More specifically, the present invention relates to vertical downflow type catalytic reactor which is capable of carry-in, installation, uninstallation and carry-out of a catalyst block in a short period of time and has an excellent ash deposition prevention function, wherein the catalyst block comprises a catalyst unit incorporated in.

### BACKGROUND ART

In a vertical down-flow type catalytic reactor for removing nitrogen oxides (NOx) contained in exhaust gas from a boiler and the like, for example, a catalyst block is supported by support receiving beams on the short sides of a bottom face of the catalyst block and the catalyst blocks are installed side by side. In order to reduce the exhaust gas flowing between the catalyst block and an inner wall of a reactor duct and between the adjacent catalyst blocks without passing through the catalyst unit, or to prevent soot dust deposition between the catalyst block and the inner wall of the reactor duct and between the adjacent catalyst blocks, various structures have been proposed.

For example, Patent Document 1 discloses a sealing structure for denitration equipment, comprising an ash deposition prevention member, a packing member and a fastener, wherein the ash deposition prevention member is tightly fixed to a pack frame at an end face of a catalyst pack so as to block boundary between the catalyst packs and boundary between the catalyst pack and a denitration reactor casing, the packing member is sandwiched between the ash deposition prevention member and a back frame at an end face of the catalyst pack; the fastener is for fastening the ash deposition prevention member and the back frame at the end face of the catalyst pack.

Patent Document 2 discloses a catalyst basket structure in which a plurality of basket bodies having side portions partitioned and being filled with a catalyst for decomposing harmful substances in a gas are arranged adjacent to each other at a predetermined interval in an exhaust gas passage, characterized in that an ash deposition prevention member is attached in a sealed state between the partition walls on a upstream side of exhaust gas flow of the adjacent basket bodies so as to close a gap and to prevent an intrusion of ash in the gas.

Patent document 3 discloses a vertical down-flow type exhaust gas denitration apparatus configured to treat an exhaust gas, that is discharged from a combustion device and flowed in a vertical down flow, by providing multiple catalyst blocks with a built-in catalyst unit, wherein the apparatus comprises a slidable first ash accumulation prevention plate and a slidable second ash accumulation prevention plate between the adjacent catalyst blocks, the first ash accumulation prevention plate has a mountain-shaped structure in the upper part and has a hook in the lower part, the hook is configured to be inserted between a lower part of a protector arranged on a upper part of the catalyst block and the upper part of the catalyst block. A suspension lug provided for suspending the catalyst block is provided with an elongated hole, and the second ash accumulation prevention plate is detachably supported by a locking member provided through the elongated hole of the suspension lug.

Patent document 4 discloses a vertical down-flow type catalytic reactor, wherein a large number of catalyst blocks are arranged in a main body of the catalytic reactor so that short sides of a bottom face of the catalyst block were supported by support beams, the catalyst block comprises a rectangular parallelepiped frame-shaped case and a large number of catalyst units incorporated in the rectangular parallelepiped frame-shaped case, the catalyst unit comprises plate-shaped or grid-shaped catalyst bodies stacked and accommodated in a frame body, characterized in that a lifting hardware is provided on short side of each corner of the frame-shaped case, a sealing material with a circular cross section is provided at an upper part of a gap between long sides of the catalyst blocks to join a contact portion of the sealing material and the catalyst block; and a dust accumulation prevention plate is provided an upper part of a gap between the short sides of the catalyst blocks.

Patent document 5 discloses an occlusion prevention device for catalyst in a denitration reactor, characterized in that the occlusion prevention device comprises a mountain-shaped protector for preventing adhesion of dust attached to adjacent cases of catalyst units arranged side by side in the denitration reactor at upstream side of gas flow between the adjacent cases; a protective equipment for preventing adhesion of dust provided between an inner wall of the denitration reactor and a case of catalyst units provided adjacent to the inner wall at upstream side of the gas flow so that a tip of the protective equipment is in contact with the inner wall; and a mountain-shaped protective device for preventing adhesion of dust attached to a rail for installing the catalyst units at upstream side of the gas flow.

Patent Document 6 discloses a diverter having a shape such as mountain shape or T shape to prevent particulates from entering gaps between adjacent catalyst blocks.

Patent document 7 discloses a denitration reactor, wherein catalyst block supporting beams are provided in multiple shelves in a casing forming an exhaust gas flow path, and catalyst blocks are disposed on the beams, characterized in that the catalyst blocks are arranged on each catalyst supporting beam with a gap, and an ash deposition prevention device having a gas rectifying function is provided so as to seal the gap.

### CITATION LIST

### PATENT LITERATURES

Patent Document 1 : JP S62-124629 U
Patent Document 2 : JP S60-183030 U
Patent Document 3 : WO 2012/004980 A1
Patent Document 4 : JP 2002-219336 A
Patent Document 5 : JP S58-143828 A
Patent Document 6 : US 2009/0065414 A1
Patent Document 7 : JP 2003-112015 A

### SUMMARY OF THE INVENTION

### PROBLEMS TO BE RESOLVED BY THE INVENTION

An object of the present invention is to provide a vertical downflow type catalytic reactor which is capable of carry-in, installation, uninstallation and carry-out of a catalyst block in a short period of time and has an excellent ash deposition prevention function, and the catalyst block used therein, wherein the catalyst block comprises a catalyst unit incorporated in.

### MEANS FOR SOLVING THE PROBLEMS

Researches to solve the above problems result in completion of the present invention including the following aspects.
[1] A catalytic reactor, comprising
   a reactor duct configured to allow a flue gas to be flowed vertically downflow, beams spread horizontally in the reactor duct, catalyst blocks comprising a cuboid or cubic frame-shaped case and a catalyst unit incorporated in the frame-shaped case,
   a first diversion member,
   a second diversion member, and
   a third diversion member
   wherein the catalyst block is bridged between and supported by at least two of the beams and the catalyst blocks are installed side by side in the reactor duct so that a front face on one of the catalyst blocks and a rear face on another of the catalyst blocks face each other and are adjacent to each other and a right side face on one of the catalyst blocks and a left side face on another of the catalyst blocks face each other and are adjacent to each other,
   the first diversion member is attached so as to close a gap between the front face and the rear face of the adjacent catalyst blocks from above,
   the second diversion member is attached so as to close a gap between the right side face and the left side face of the adjacent catalyst blocks from above, and
   the third diversion member is attached so as to close a gap between the adjacent catalyst blocks not occluded by the first and second diversion members and to cover longitudinal end portions of the first and second diversion members.
[2] The catalytic reactor according to [1], wherein transverse end portions of the first diversion member and the second diversion member are inserted in a gap between the frame-shaped case and the catalyst unit.
[3] The catalytic reactor according to [1], wherein the catalyst block further comprises a grating member attached in an opening of top face of the frame-shaped case, and transverse end portions of the first diversion member and the second diversion member are inserted in a gap between the frame-shaped case and the grating member.
[4] The catalytic reactor according to [3], wherein the catalyst block further comprises a mesh member mounted on the grating member.
[5] The catalytic reactor according to any one of [1] to [4], wherein the frame-shaped case comprises lugs attached to at least two of upper portions of the front face, the rear face, the right side face and the left side face; and the third diversion member is tied to the lug.
[6] The catalytic reactor according to any one of [1] to [5], wherein the frame-shaped case further comprises a sealing member attached so as to occlude a lower part of the gap between the adjacent catalyst blocks.
[7] A catalyst block, comprising a cuboid or cubic frame-shaped case, a catalyst unit incorporated in the frame-shaped case, and a grating member attached in an opening of top face of the frame-shaped case.
[8] The catalyst block according to [7], wherein the catalyst block further comprises a mesh member mounted on the grating member.

### ADVANTAGEOUS EFFECTS OF THE INVENTION

The vertical downflow type catalytic reactor of the present invention is capable of carry-in, installation, uninstallation and carry-out of a catalyst block in a short period of time and has an excellent ash deposition prevention function, wherein the catalyst block comprises a catalyst unit incorporated in.

### BRIEF DESCRIPTION OF THE DRAWINGS

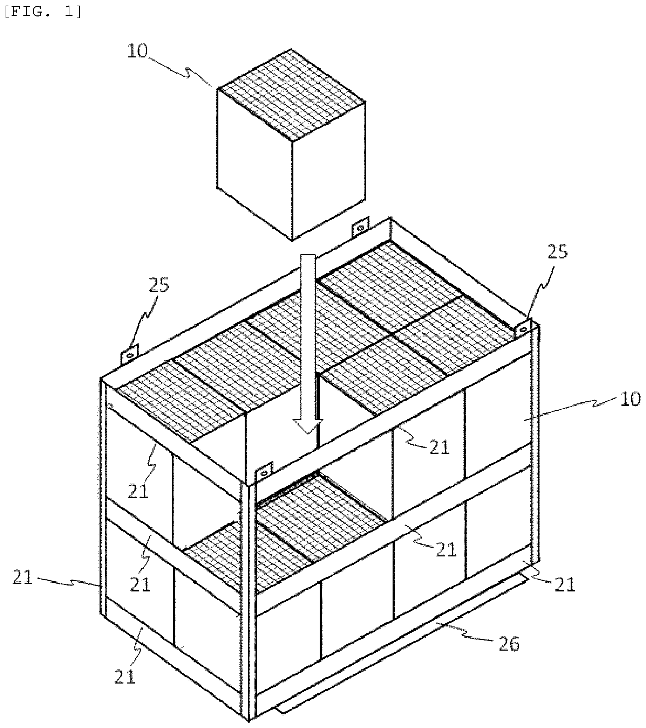

FIG. 1 is an oblique perspective illustration showing an example of a situation in which the catalyst unit is incorporated into the frame-shaped case.
FIG. 2 is an oblique perspective illustration showing an example of the catalyst unit.
FIG. 3 is an oblique perspective illustration showing an example of a situation in which grating member and mesh member are attached to the frame-shaped unit.
FIG. 4 is an oblique perspective illustration showing an example of the catalyst block.

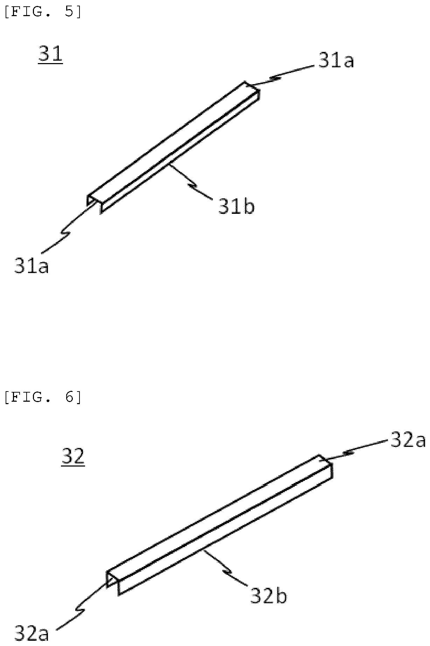

FIG. 5 is an oblique perspective illustration showing the first diversion member 31.
FIG. 6 is an oblique perspective illustration showing the second diversion member 32.

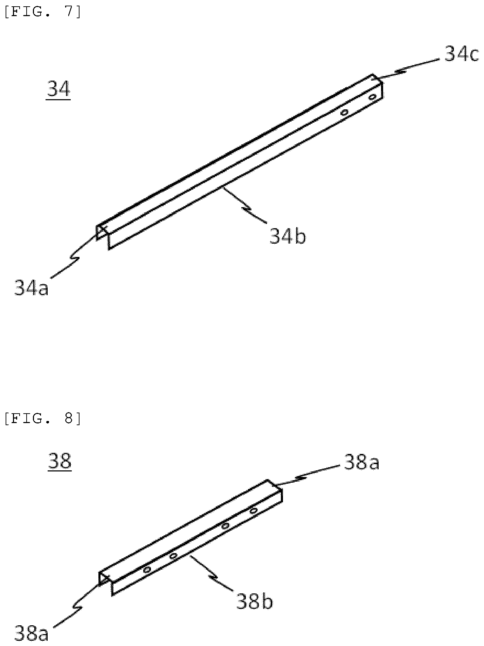

FIG. 7 is an oblique perspective illustration showing the second diversion member 34.
FIG. 8 is an oblique perspective illustration showing the third diversion member 38.
FIG. 9 is an oblique perspective illustration showing the second diversion member 132.
FIG. 10 is an oblique perspective illustration showing the first diversion member 131.
FIG. 11 is an oblique perspective illustration showing an example of a process of assembling the catalyst blocks, the first diversion members, the second diversion members and the third diversion members to manufacture a catalytic reactor.
FIG. 12 is an illustration when viewed from direction A showing an example of arrangement when the first diversion member 31, the second diversion member 32 and the third diversion member 38 are attached to gaps between the catalyst blocks.
FIG. 13 is an illustration when viewed from direction B showing the arrangement shown in FIG. 12.
FIG. 14 is an illustration when viewed from direction A showing an example of arrangement when the first diversion member 31, the second diversion member 132 and the third diversion member 38 are attached to gaps between the catalyst blocks.
FIG. 15 is an illustration when viewed from direction B showing the arrangement shown in FIG. 14.
FIG. 16 is an illustration when viewed from direction A showing an example of arrangement when the first diversion member 131, the second diversion member 132 and the third diversion member 38 are attached to gaps between the catalyst blocks.
FIG. 17 is an illustration when viewed from direction B showing the arrangement shown in FIG. 16.
FIG. 18 is an illustration showing an example of the denitration reactor in the present invention.

### EMBODIMENTS FOR CARRYING OUT THE INVENTION

Embodiments of the present invention will be described in more detail on the basis of the drawings.

One embodiment of the catalytic reactor of the present invention comprises a reactor duct 2 , beams 33 , catalyst blocks 20, a first diversion member 31, a second diversion member 32 and a third diversion member 37.

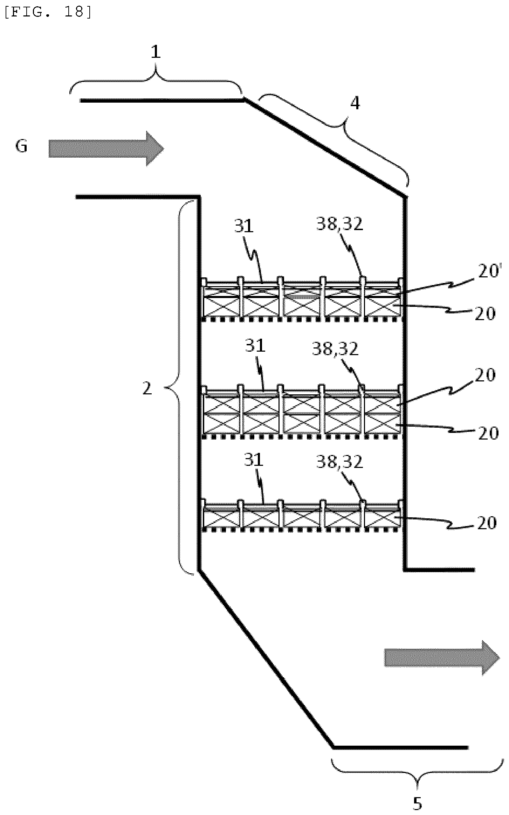

FIG. 18 is an illustration showing one embodiment of the denitration reactor of the present invention.

The reactor duct 2 has a vertical flow path that allows flue gas to flow vertically down. Cross-sectional shape of the flow path of the reactor duct seen from gas flow direction is not particularly limited, but is preferably rectangular. A cross-sectional size of the reactor duct is preferably substantially the same from an inlet of the reactor duct to an outlet of the reactor duct. The inlet of the reactor duct is connected to an inlet duct 1 that allows flue gas to flow through an exhaust duct of a combustion device such as a boiler. The inlet duct may have a horizontal flow path. A joint duct 4 having a downwardly inclined flow path connecting the horizontal flow path and the vertical flow path may be provided between the inlet duct having the horizontal flow path and the reactor duct 2 having the vertical flow path. Cross-sectional sizes of the inlet duct 1 and the outlet duct 5 may be smaller, the same, or larger than those of the reactor duct. A device (for example, a screen plate, a rectifying plate, etc.) can be provided in the reactor duct to evenly flow the flue gas to the catalyst block 20. Furthermore, a device for supplying a reducing agent such as ammonia can be provided prior to the catalyst block 20, for example in the inlet duct 1, the joint duct 4, or an upper part of the reactor duct 2.

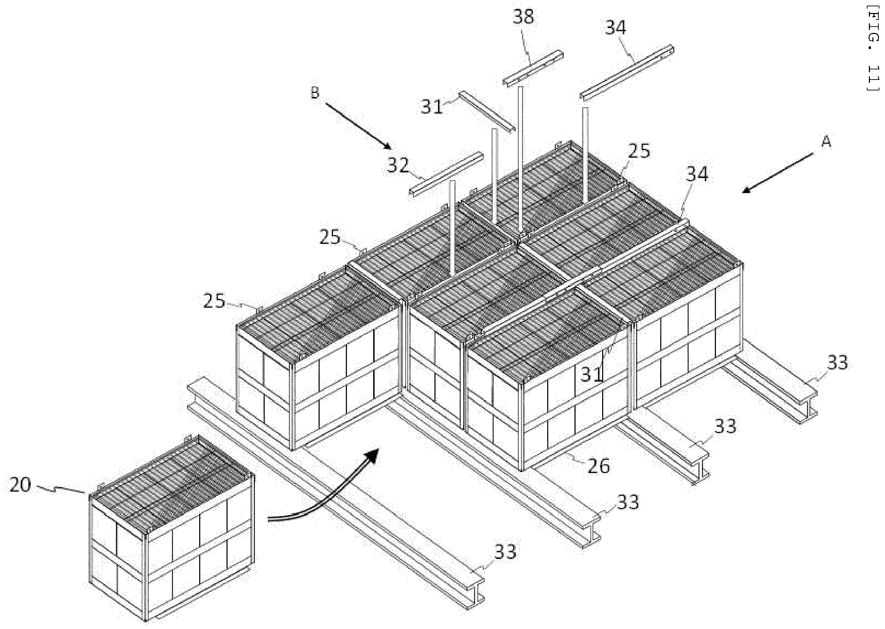

The beams 33 are spread horizontally in the reactor duct. And, as shown in FIG. 11, the catalyst block 20 is bridged between and supported by at least two of the beams. A plurality of the catalyst blocks are installed side by side in the reactor duct so that a front face on one of the catalyst blocks and a rear face on another of the catalyst blocks face each other and are adjacent to each other and a right side face on one of the catalyst blocks and a left side face on another of the catalyst blocks face each other and are adjacent to each other. The beam 33 is generally box-shaped, H-shaped, or T-shaped in cross section. The catalyst blocks are bridged so that the front or rear faces are parallel to the beams in FIG. 11, alternatively, they may be bridged so that the right side or left side faces are parallel to the beams. Arrangement of the catalyst blocks 20 in the reactor duct is not particularly limited. For example, in FIG. 18, catalyst blocks having a two-stage catalyst unit structure may be arranged in one shelf like the bottom shelf, catalyst blocks having a two-stage catalyst unit structure may be arranged in two shelves like the middle shelf, or catalyst blocks having a two-stage catalyst unit structure and catalyst blocks having single-stage catalyst unit structure may be arranged in each of two shelves like the uppermost shelf.

The catalyst block 20 is formed by incorporating at least one catalyst unit 10 in a frame-shaped case 21. Although not shown in the drawings, legs may be provided at bottom portion of the frame-shaped case so that the bottom surface of the catalyst unit 10 is higher than the top surface of the beam. The legs are not restricted by their shape, the leg may be cylindrical or grid-shaped with a lower part of a frame constituting the frame-shaped case extending downward, or the leg may be a cylindrical or grid-shaped leg member attached to the bottom surface of the frame-shaped case. Also, when a plurality of catalyst units are assembled with horizontally arrangement, it is preferable to provide the legs below gaps between the adjacent catalyst units. By providing such grid-shaped legs, the four corners of the bottom surface of the catalyst unit are firmly supported.

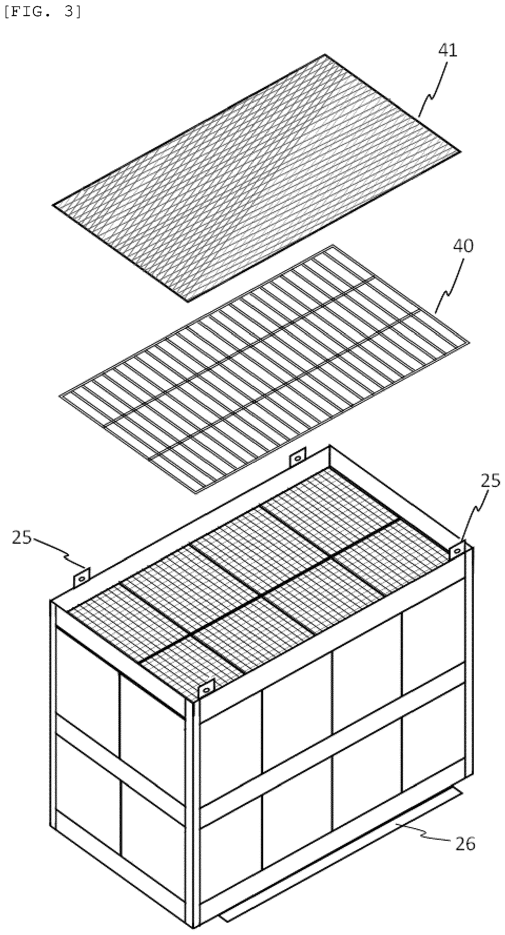

As shown in FIG. 3, the catalyst block preferably further comprises a grating member 40 attached into an opening of top face of the frame-shaped case. The catalyst block preferably further comprises a mesh member 41 mounted on the grating member 40. The grating member should be called a lattice-like floor grate made of metal. The grating member usually comprises bearing plates (main member), end plates and twist bars. By attaching the grating member, it is possible to place heavy objects on top of the catalyst block and people can ride on it.

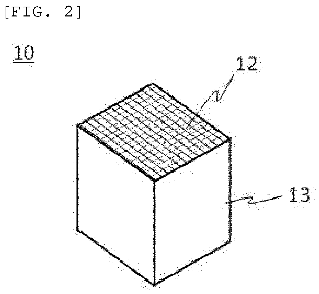

The catalyst unit 10 comprises, for example, a frame body 13 and a catalyst body 12 housed in the frame body 13 (see FIG. 2) or is the catalyst body 12 itself. The catalyst body 12 can have a shape such as a grid shape, honeycomb shape, corrugated board shape, plate shape, or the like. The catalyst body 12 used for the denitration reaction comprises a denitration catalytically active component. As the denitration catalytically active component, mentioned can be a titanium-based denitration catalytically active component comprising an oxide of titanium, an oxide of molybdenum and/or tungsten and an oxide of vanadium; a zeolite-based denitration catalytically active component comprising an aluminosilicate such as zeolite mainly and metals such as Cu and Fe, etc. supported on the aluminosilicate; or a mixture of the titanium-based denitration catalytically active component and the zeolite-based denitration catalytically active component. Of these, the titanium-based denitration catalytically active component is preferred.

Examples of the titanium-based denitration catalytically active component can include a Ti-V-W denitration catalytically active component, a Ti-V-Mo denitration catalytically active component, and a Ti-V-W-Mo denitration catalytically active component.

A ratio of V element to Ti element is preferably not more than 2% by weight, more preferably not more than 1% by weight in terms of a weight percentage of V₂O₅/TiO₂. A ratio of Mo element and/or W element to Ti element is preferably not more than 10% by weight, more preferably not more than 5% by weight in terms of a weight percentage of (MoO₃+WO₃)/TiO₂.

The catalyst body may contain co-catalyst or additive such as an oxide of P, an oxide of S, an oxide of Al (e.g., alumina), an oxide of Si (e.g., glass fiber), an oxide of Zr (e.g., zirconia), gypsum (eg, gypsum dihydrate), and zeolites. These can be used in the form of powders, sols, slurries, fibers, etc. during catalyst preparation.

Shape of the frame body 13 is not particularly limited as long as the frame body can accommodate the catalyst body 12, but it is preferable that the frame body as a whole forms a cuboid or a cube. The frame body 13 has at least one inlet and at least one outlet so that flue gas G can flow into and out of a region (catalyst layer) in which the catalyst body is accommodated.

It is preferable that the frame-shaped case 21 as a whole forms a cuboid or a cube. The frame-shaped case has at least one inlet and at least one outlet to allow flue gas to flow into and out of the catalyst unit. The catalyst unit is preferably incorporated and integrated within the frame-shaped case so that its inlet and outlet are on the same side as the inlet and outlet of the frame-shaped case.

The frame-shaped case 21 is provided with hanging hardware for suspending the catalyst block 20 with a hoist or the like putting a slinging tool (for example, a wire rope, a wire sling, etc.) or a dedicated tool. A lug 25 is shown as a hanging hardware in the figure, it is not limited to this. There are no particular restrictions on the shape of the hanging hardware (lug) as long as the slinging tool can be put thereon. Examples thereof can include an L-shaped hook, a J-shaped hook, a U-shaped hook, a C-shaped hook, an O-shaped ring, and a D-shaped ring. Alternatively, an upper curtain plate of the frame-shaped case 21 may be provided with a hole through which the slinging tool can be passed. Further, a spacing member may be attached to the frame-shaped case 21 to secure a gap between adjacent catalyst blocks. The spacing member facilitates uniformity in gap size.

An inner wall of the reactor duct may be fitted with a spacing member to ensure a gap between the inner wall and the catalyst block closest to the inner wall. Further, the inner wall may have a structure for attaching, by screwing, inserting, etc., a fourth diversion member over the gap between the inner wall of the reactor duct and the catalyst block. The fourth diversion member may have a structure similar to the first, second or third diversion member described below or another structure, with a size and shape corresponding to the shape of the gap between the inner wall of the reactor duct and the catalyst block.

The hanging hardware may or may not protrude above the upper end of the frame-shaped case 21. When the hanging hardware is attached so as to protrude upward, it can be used as a guide when stacking the catalyst blocks vertically. Moreover, when attaching the third diversion member, for example, a hanging hardware can be used in a manner described later.

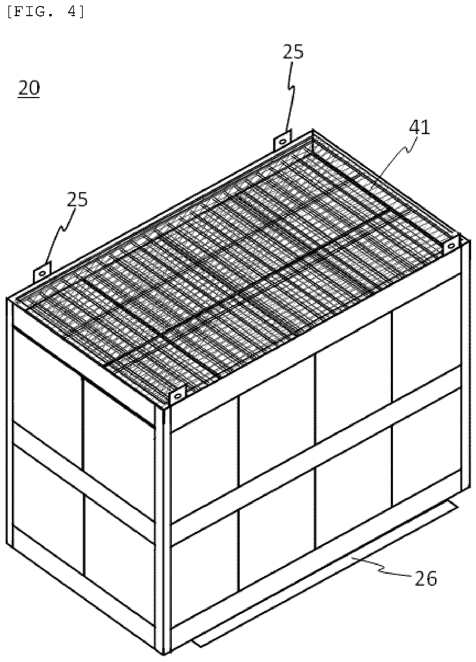

The catalyst block 20 shown in FIG. 4 is bridged so that the front face or rear face is parallel to the beam and a sealing member 26 is attached to the lower portion (preferably the lower end) of the right side face of the frame-shaped case. When the catalyst blocks are installed side by side in the reactor duct, the lower part of the gap between the front and back faces is occluded by the beam. The sealing member 26 occludes the lower part of the gap between the right side and left side faces. As the result, the amount of flue gas that slips through the gaps between the catalyst blocks without passing through the catalyst layer can be reduced. As long as the gap between the right side face of one frame-shaped case and the left side face of another frame-shaped case can be occluded, instead of attaching the sealing member to the lower portion (preferably the lower end) of the right side face of the frame-shaped case, the frame-shaped case may be attached to the lower portion (preferably the lower end) of the left side face of the frame-shaped case. A length and width of the sealing member respectively are determined according to the distance between the adjacent beams and the size of the gap between the right and left side faces of the adjacent catalyst blocks so as to suppress slipping through of flue gas, appropriately. When the catalyst blocks are bridged so that the right side face or the left side face is parallel to the beam, a sealing member can be attached to the lower portion of the front face or the rear face. The shape of the sealing member is not particularly limited as long as it can occlude the flue gas passage, and may be, for example, a flat plate shape, an L-shaped plate (angle material, etc.) shape, or the like.

The first diversion member 31 is attached so as to close the gap between the front and rear faces of the adjacent catalyst blocks from above. The second diversion members 32 and 34 are attached so as to close the gap between the right side and left side faces of the adjacent catalyst blocks from above.

A second diversion member 34 can be used, for example, in a catalyst block adjacent to the inner wall of the reactor duct. The second diversion member 34 may be provided with a hole (hereinafter referred to as a bolt hole) that can be used for bolting or the like, on the longitudinal end portion 34c side near the inner wall of the reactor duct. The bolt hole may be threaded by tapping or burring, or may not be threaded. A bolt can be screwed with a nut in a bolt hole that is not provided with a threaded portion. Also, the bolt hole may be a perfectly circular hole, an oval hole, a slit hole, a key hole (DARUMA-shaped hole), or the like.

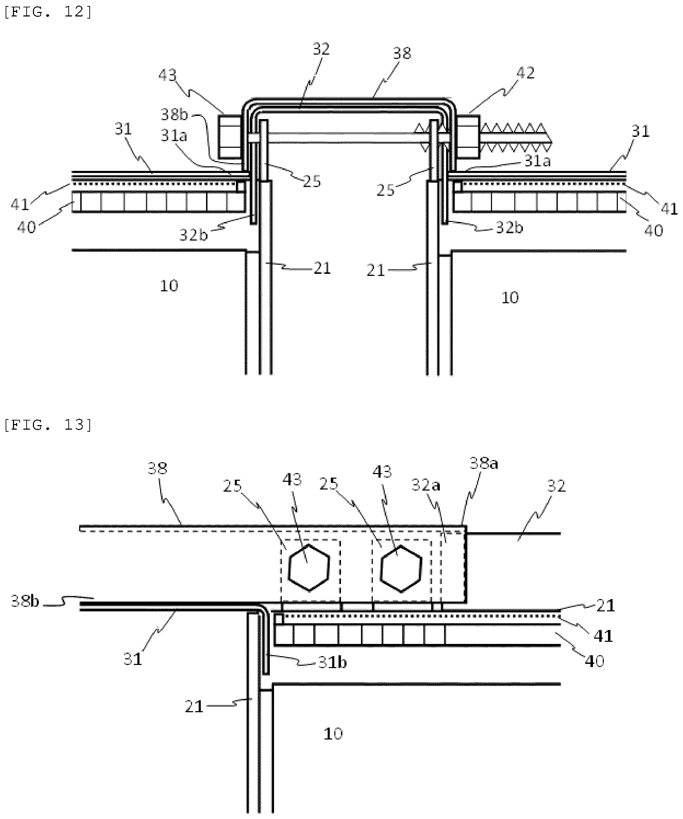

In FIG. 13 showing one embodiment, a transverse end portion 31b of the first diversion member 31 is inserted into the gap between the frame-shaped case 21 and the catalyst unit 10, or is inserted into the gap between the frame-shaped case 21 and the grating member 40. In order to make it difficult to slip out of the gap, the transverse end portions 31b may be corrugated, hooked, or the like.

In FIG. 12 showing one embodiment, the transverse end portion 32b of the second diversion member 32 is inserted into the gap between the frame-shaped case 21 and the catalyst unit 10, or is inserted into the gap between the frame-shaped case 21 and the grating member 40. In order to make it difficult to slip out of the gap, the transverse end portion 32b may be corrugated, hooked, or the like.

In this embodiment, the first diversion member 31 and the second diversion member 32 do not need to be welded or screwed to the frame-shaped case or the like, but may be welded or screwed for robustness.

The first diversion member and the second diversion member are not limited by their shape as long as they can divert flue gas to the inlet of the catalyst block. In a preferred embodiment, the first diversion member and the second diversion member are upwardly convexed shape, such as mountain shape, rectangular shape or polygonal shape. The first diversion member and the second diversion member may have a handle on the top side for convenience in removal. The first diversion member and the second diversion member are preferably installed after the catalyst block has been placed on the beam in place.

When the first diversion members and the second diversion members are attached, there may be gap between the longitudinal end portion 31a of one of the first diversion members and the longitudinal end portion 31a of another of the first diversion members or gap between the longitudinal end portion 32a of one of the second diversion members and the longitudinal end portion 32a of another of the second diversion members. An attempt is made to eliminate gap between the longitudinal end portion 31a of one of the first diversion members and the longitudinal end portion 31a of another of the first diversion members or gap between the longitudinal end portion 32a of one of the second diversion members and the longitudinal end portion 32a of another of the second diversion members, resulting in the structure of each of the end portions, particularly the structure of the intersection of the first diversion member and the second diversion member, is complicated, high dimensional accuracy is required, or a long time to construct is taken.

The third diversion member 38 is attached to overlay the longitudinal end portions 31a, 32a (or 34a) of the first and second diversion members and to occlude the gap between adjacent catalyst blocks not occluded by the first diversion member and the second diversion member. The third diversion member may have a handle on the top side for convenience in removal. In this embodiment, as shown in FIG. 12, the end portion 31a of the first diversion member 31 is held down by the end portion 38b of the third diversion member; or as shown in FIG. 13, the end portion 32a of the second diversion member 32 is held down by the end portion 38a of the third diversion member 38.

In the preferred embodiment shown in the figure, the third diversion member 38 is provided with bolt hole. It is possible to design so that the position of the bolt hole generally coincides with the position of the hanging hardware 25 on the frame-shaped case. As shown in FIG. 12 and FIG. 13, using the bolt hole, the third diversion member 38 can be screwed to the hanging hardware 25, for example, by means of the bolt 43 and the nut 42. The screw may have a locking mechanism. The end portions of the first diversion member and the second diversion member are pressed by the covered portion of the third diversion member. Therefore, it is not necessary to weld or screw the first diversion member and the second diversion member to the frame-shaped case or the like.

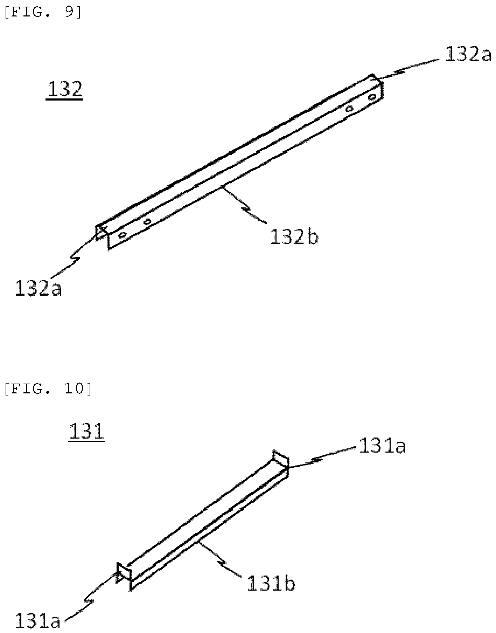

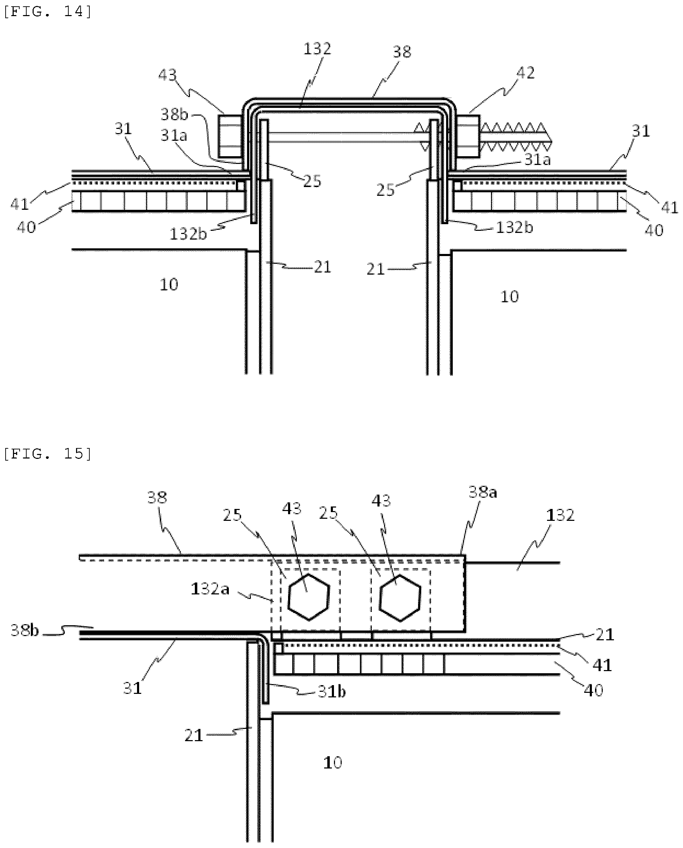

In another embodiment of the present invention shown in FIG. 14 and FIG. 15, the third diversion member 38, the first diversion member 31 and the second diversion member 132 are used. In this embodiment, as shown in FIG. 14, the end portion 31a of the first diversion member 31 is held down by the end portion 38b of the third diversion member 38, or as shown in FIG. 15, the end portion 132a of the second diversion member 132 is held down by the end portion 38a of the third diversion member 38. And as shown in FIG. 9, the second diversion member 132 is provided with bolt hole at position corresponding to the bolt hole of the third diversion member 38. Using the bolt holes, the third diversion member 38 and the second diversion member 132 can be screwed to the hanging hardware 25, for example, by bolt 43 and nut 42.

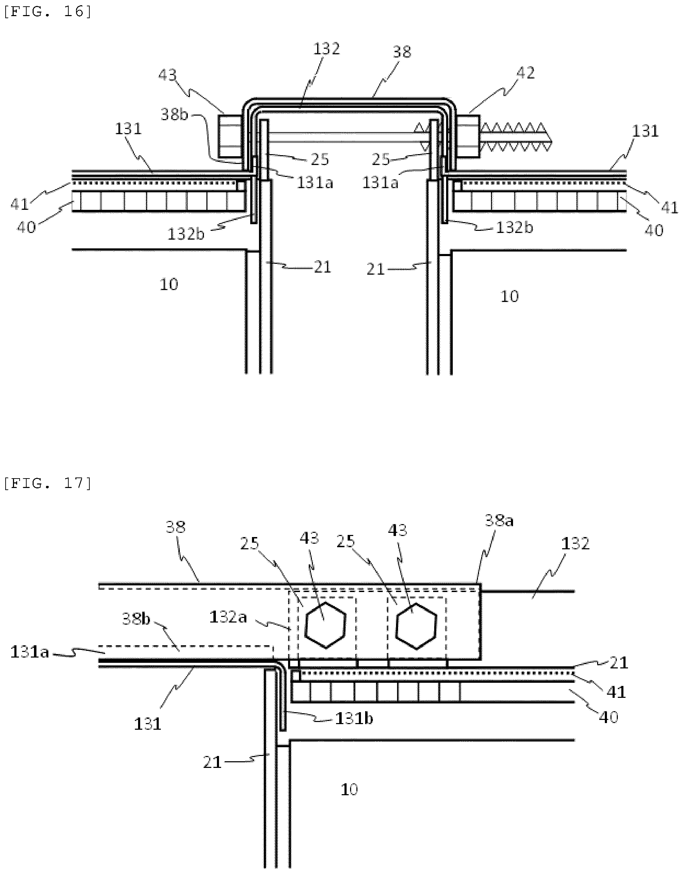

In another embodiment of the present invention shown in FIG. 16 and FIG. 17, the third diversion member 38, the first diversion member 131 and the second diversion member 132 are used. As shown in FIG. 10, a longitudinal end portion 131a of the first diversion member 131 is provided with a bent portion. In this embodiment, as shown in FIG. 16, the bent portion at the end portion 131a of the first diversion member 131 is inserted inside the transverse end portion 38b of the third diversion member 38, and the first diversion member 131 is held down by the end portion 38b of the third diversion member 38. As shown in FIG. 17, the end portion 132a of the second diversion member 132 is held down by the end portion 38a of the third diversion member 38. The second diversion member 132 is provided with bolt hole at position corresponding to the bolt hole of the third diversion member 38. Using the bolt holes, the third diversion member 38 and the second diversion member 132 can be screwed to the hanging hardware 25, for example, by the bolt 43 and the nut 42. The bent portion at the end portion 131a is not limited to the shape shown in the figure, and may be formed in a bank-like shape by thickening only the portion of the end portion 131a.

### (Other embodiments)

In the catalytic reactor of the present invention, the arrangement of the catalyst block, the first diversion member, the second diversion member and the third diversion member as described above may be partially applied or globally applied. Also, some of the arrangements in the prior art catalytic reactor may be replaced with the arrangements of the catalyst block, the first diversion member, the second diversion member and the third diversion member in the present invention.

### CODE LIST

1 : Inlet duct
2 : Reactor duct
3 : Outlet duct
4 : Joint duct
G : Flue gas before denitration
G' : Flue gas after denitration
10 : Catalyst unit
   12 : Catalyst body
   13 : Frame body
20 : Catalyst block (with two-stage catalyst unit structure)
   21: Frame-shaped case
   25 : Hanging hardware (lifting lug)
   26 : Sealing member
20' : Catalyst block (with single-stage catalyst unit structure)
31 : First diversion member
   31a : Longitudinal end portion
   31b : Transverse end portion
131 : First diversion member (with bent in both end portions)
   131a : Longitudinal end portion
   131b : Transverse end portion
32 : Second diversion member (without bolt hole)
   32a : Longitudinal end portion
   32b : Transverse end portion
132 : Second diversion member (with bolt holes in both end portions)
   132a : Longitudinal end portion
   132b : Transverse end portion
33 : Beam
34 : Second diversion member (with bolt hole in one end portion)
   34a : Longitudinal end portion
   34b : Transverse end portion
38 : Third diversion member
   38a : Longitudinal end portion
   38b : Transverse end portion
42 : Nut
43 : Bolt
40 : Grating member
41 : Mesh member
50 : Gap between front and back faces
51 : Gap between right side and left side faces

## Claims

1. A catalytic reactor, comprising
a reactor duct configured to allow a flue gas to be flowed vertically downflow,
beams spread horizontally in the reactor duct, catalyst blocks comprising a cuboid or cubic frame-shaped case and a catalyst unit incorporated in the frame-shaped case,
a first diversion member,
a second diversion member, and
a third diversion member
wherein the catalyst block is bridged between and supported by at least two of the beams and the catalyst blocks are installed side by side in the reactor duct so that a front face on one of the catalyst blocks and a rear face on another of the catalyst blocks face each other and are adjacent to each other and a right side face on one of the catalyst blocks and a left side face on another of the catalyst blocks face each other and are adjacent to each other,
the first diversion member is attached so as to close a gap between the front face and the rear face of the adjacent catalyst blocks from above,
the second diversion member is attached so as to close a gap between the right side face and the left side face of the adjacent catalyst blocks from above, and
the third diversion member is attached so as to close a gap between the adjacent catalyst blocks not occluded by the first and second diversion members and to cover longitudinal end portions of the first and second diversion members.

2. The catalytic reactor according to claim 1, wherein transverse end portions of the first diversion member and the second diversion member are inserted in a gap between the frame-shaped case and the catalyst unit.

3. The catalytic reactor according to claim 1, wherein the catalyst block further comprises a grating member attached in an opening of top face of the frame-shaped case, and transverse end portions of the first diversion member and the second diversion member are inserted in a gap between the frame-shaped case and the grating member.

4. The catalytic reactor according to claim 3, wherein the catalyst block further comprises a mesh member mounted on the grating member.

5. The catalytic reactor according to any one of claims 1 to 4, wherein the frame-shaped case comprises lugs attached to at least two of upper portions of the front face, the rear face, the right side face and the left side face; and the third diversion member is tied to the lug.

6. The catalytic reactor according to any one of claims 1-5, wherein the frame-shaped case further comprises a sealing member attached so as to occlude a lower part of the gap between the adjacent catalyst blocks.

7. A catalyst block, comprising a cuboid or cubic frame-shaped case, a catalyst unit incorporated in the frame-shaped case, and a grating member attached in an opening of top face of the frame-shaped case.

8. The catalyst block according to claim 7, wherein the catalyst block further comprises a mesh member mounted on the grating member.
